# EUROPEAN PATENT APPLICATION

(11) **EP 4 306 232 A1**
(43) Date of publication of application: **17.01.2024**
(21) Application number: 22767404.1
(22) Date of filing: 03.03.2022
(51) Int. Cl.: B21D 43/05, B21D 19/04, B21D 43/08, B21D 43/14, B21D 51/26, H01M 50/107

(54) **MULTI-ROLLER SYSTEM, AND DEVICE AND METHOD FOR FORMING BATTERY CAN**

(30) Priority: 08.03.2021 KR 20210030312
(71) Applicant: LG Energy Solution, Ltd., Seoul 07335 (KR)
(72) Inventor: PARK, Kyeong Hoon, Daejeon 34122 (KR); JUNG, Jimin, Daejeon 34122 (KR); LEE, Je Jun, Daejeon 34122 (KR); KIM, Hak Kyun, Daejeon 34122 (KR)
(74) Representative: Goddar, Heinz J.
(86) International application number: PCT/KR2022/003052
(87) International publication number: WO 2022/191508

(57) **Abstract**

The present specification relates to a multi-roller system including two pairs or more of rollers, in which the two pairs or more of rollers rotate about independent rotation axes, respectively, changes in heights of the two pairs or more of rollers are controlled, cross-sections of the two pairs or more of rollers have different shapes, and the two pairs or more of rollers approach and press the battery can at intervals between the two pairs or more of rollers.

## Description

### [Technical Field]

This application claims priority to and the benefit of Korean Patent Application No. 10-2021-0030312 filed with the Korean Intellectual Property Office on March 8, 2021, the entire contents of which are incorporated herein by reference.

The present invention relates to a multi-roller system and an apparatus and method for forming a battery can.

### [Background Art]

A battery can of a model of a cylindrical secondary battery recently developed has a larger inner diameter than a model (1865/2170) in the related art, and thus the battery can is made of a material having a large thickness. For this reason, a high load needs to be applied and a large amount of process time is required to form the battery can of the cylindrical secondary battery.

The battery can of the cylindrical secondary battery is typically formed by sequentially performing several processes such as a cylindrical beading (CBD) process, a cylindrical crimping 1-2-3 (CCR 1-2-3) process, and a cylindrical sizing (CSZ) process. For this reason, a large amount of process time is required. Therefore, a plurality of forming facilities needs to be installed in parallel to achieve the target production of the battery cans.

Recently, the plurality of forming facilities has been installed in parallel to form the battery cans to produce a large number of battery cans within a predetermined period of time if possible. However, the time is required to transfer the facilities installed in parallel. In addition, since the facilities are transferred, there is a problem in that the battery cans need to be fixed again and deviation in setting values may occur at the time of fixing the battery cans again. This problem results in differences in forming quality.

### [Detailed Description of the Invention]

### [Technical Problem]

The present invention has been made in an effort to solve the above-mentioned problems, and an object of the present invention is to provide a multi-roller system and an apparatus and method for forming a battery can, which are capable of reducing the time required to transfer facilities and preventing deviation in setting values that occurs at the time of fixing a battery can again in response to the transfer of the facilities.

However, technical problems to be solved by the present invention are not limited to the above-mentioned technical problems, and other technical problems, which are not mentioned in the present specification, may be clearly understood by those skilled in the art from the following descriptions of the invention.

### [Technical Solution]

To achieve the above-mentioned object, the present invention provides a multi-roller system and an apparatus and method for forming a battery can.

An embodiment of the present invention provides a multi-roller system comprising: two pairs or more of rollers, wherein the two pairs or more of rollers rotate about independent rotation axes, respectively, changes in heights of the two pairs or more of rollers are independently controlled, cross-sections of one or more of the two pairs or more of rollers have different shapes, and intervals between a battery can and the two pairs or more of rollers are different from one another.

Another embodiment of the present invention provides an apparatus for forming a battery can, the apparatus comprising: a fixing unit configured to fix a battery can; and the above-mentioned multi-roller system.

Still another embodiment of the present invention provides a method of forming a battery, the method comprising: assembling a battery by positioning an electrode assembly, in which a first electrode, a separator, and a second electrode are sequentially stacked and wound, in a battery can, injecting an electrolyte, forming a beading portion pressed inward at an end of the battery can adjacent to an opening portion of the battery can, and stacking a gasket and a cap assembly on the beading portion; fixing the battery can; forming an inclined section in which an end of the opening portion of the battery can is inclined toward a central axis of the battery can by pressing the end of the opening portion positioned above the beading portion; forming a sealed section in which the end of the opening portion of the battery can is parallel to a lateral portion of the battery can by pressing the end of the opening portion of the battery can having the inclined section; and forming a flat section parallel to a lower surface of the battery can by pressing the end of the opening portion of the battery can having the inclined section and the sealed section, wherein at least two of forming the inclined section, forming the sealed section, and forming the flat section use the above-mentioned multi-roller system.

### [Advantageous Effects]

According to the aspect of the present invention, the processes of forming a battery can in the related art, which are arranged in parallel, may be unified.

According to the aspect of the present invention, the pressure is applied to several pressing points on the battery can. Therefore, it is possible to advantageously transmit the force and minimize the loads applied to the respective rollers.

According to the aspect of the present invention, the processes may be unified, and the complex forming process may be efficiently achieved.

According to the aspect of the present invention, the forming process may be quickly performed with a comparatively small effort through the continuous operations, thereby significantly reducing the process time.

According to the aspect of the present invention, the facility is not transmitted, which may reduce the time required to transfer the facility. Further, it is possible to minimize deviation in setting values at the time of fixing the battery can again in consideration of the transfer of the facility. Therefore, it is possible to improve quickness and minimize deviation between the processes.

According to the aspect of the present invention, forming quality of the battery can is improved.

However, the effects obtained by the present invention are not limited to the aforementioned effects, and other technical effects, which are not mentioned in the present specification, will be clearly understood by those skilled in the art from the following description of the present invention.

### [Brief Description of Drawings]

FIG. 1 is a perspective view of a roller system in the related art.
FIG. 2 is a perspective view of a multi-roller system according to an embodiment of the present invention.
FIG. 3 is a front view illustrating a state in which an inclined section is formed by a roller A'.
FIG. 4 is a front view illustrating a state in which a sealed section is formed by a roller B'.
FIG. 5 is a front view illustrating a state in which a flat section is formed by a roller C'.

### [Explanation of Reference Numerals and Symbols]

- 1:: Battery can
- 2:: Fixing unit
- 3:: Cylindrical secondary battery
- 10:: End of opening portion (of battery can)
- 11:: Gasket
- 12:: Lateral portion of battery can
- 13:: Cap assembly
- 14:: Inclined section
- 15:: Sealed section
- 16:: Flat section
- 100:: Beading portion
- 200:: Crimping portion
- A:: First roller
- B:: Second roller
- C:: Third roller
- A':: Cross-section of first roller
- B':: Cross-section of second roller
- C':: Cross-section of third roller

### [Best Mode]

The present invention may be variously modified and may have various embodiments, and particular embodiments illustrated in the drawings will be described below in detail. However, the description of the specific embodiments is not intended to limit the present invention to the particular exemplary embodiments, but it should be understood that the present invention is to cover all modifications, equivalents and alternatives falling within the technical spirit and technical scope of the present invention.

In the present specification, the terms such as "first" and "second" may be used to describe various constituent elements, but the constituent elements should not be limited by the terms. These terms are used only to distinguish one constituent element from another constituent element. For example, a first component may be named a second component, and similarly, the second component may also be named the first component, without departing from the scope of the present invention.

In the present specification, the term "and/or" includes any and all combinations of a plurality of the associated listed items.

In the present specification, unless otherwise separately stated in the present specification, the singular expressions used herein are intended to include the plural expressions.

In the present application, the terms "comprises," "comprising," "includes," "including," "containing," "has," "having" or other variations thereof are inclusive and therefore specify the presence of stated features, numbers, steps, operations, processes, components, members, and/or combinations thereof, but do not preclude the presence or addition of one or more other features, numbers, steps, operations, processes, components, members, and/or combinations thereof.

Unless otherwise defined, all terms used herein, including technical or scientific terms, have the same meaning as commonly understood by those skilled in the art to which the present invention pertains.

Hereinafter, exemplary embodiments according to the related art and the present invention will be described in detail with reference to the accompanying drawings.

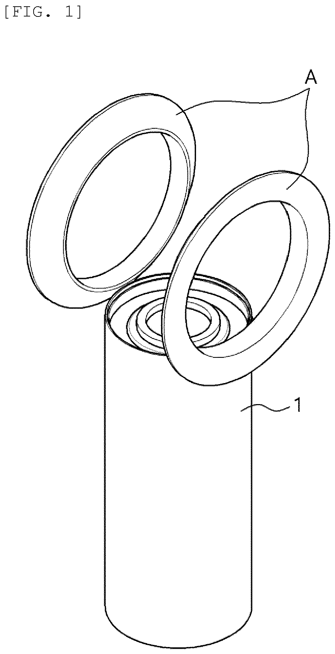

FIG. 1 is a perspective view of a roller system in the related art and illustrates a pair of first rollers A configured to press (or form) an end of an opening portion of a battery can 1. In this case, the first rollers are applied only to a single process. For example, the single process may be a first crimping process. To perform a subsequent process, the battery can pressed by the first rollers needs to be transferred to another roller system. For example, second rollers may be installed in another roller system. In this case, process deviation occurs because of the transfer.

The embodiment of the present invention provides a multi-roller system comprising: two pairs or more of rollers, wherein the two pairs or more of rollers rotate about independent rotation axes, respectively, changes in heights of the two pairs or more of rollers are independently controlled, cross-sections of one or more of the two pairs or more of rollers have different shapes, and intervals between a battery can and the two pairs or more of rollers are different from one another.

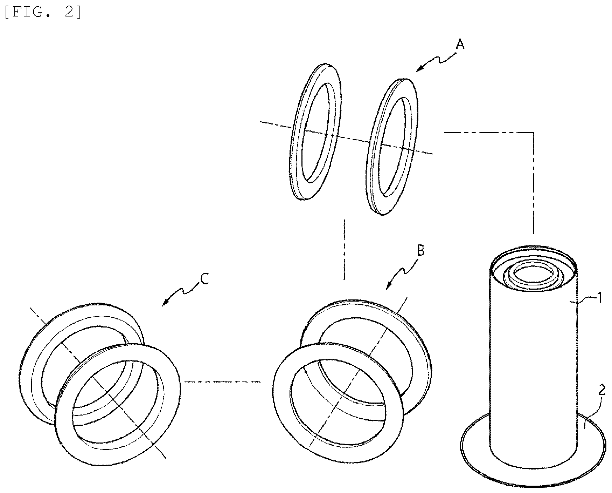

Specifically, referring to FIG. 2, the two pairs or more of rollers to be applied to the battery can 1 includes first rollers A, second rollers B, and third rollers C, for example. A fixing unit 2 fixes the battery can 1. The first rollers A, the second rollers B, and the third rollers C are rotated about the independent or different rotation axes, and the changes in heights of the first rollers A, the second rollers B, and the third rollers C are independently controlled. In addition, the cross-sections of one or more of the two pairs or more of rollers have different shapes. In this case, the configuration in which the cross-sections of one or more of the rollers have different shapes means that regions of the rollers approaching the battery can are different from one another or cross-section shapes made by cutting the rollers in a width direction are different from one another.

In addition, the first to third rollers may approach and press the battery can 1 with the time difference.

In addition, pressures applied by the first to third rollers to the battery can 1 may be equal to or different from one another.

According to the embodiment, once the battery can is fixed, one process is performed by the rollers that approach the battery can first, and then subsequent processes are sequentially performed because the intervals between the battery can and the pairs of first to third rollers are different from one another. Therefore, unlike the related art, it is not necessary to transfer the battery can pressed by the first rollers to another roller system. Therefore, the process deviation caused by the transfer does not occur.

The embodiment of the present invention provides the multi-roller system, wherein the two pairs or more of rollers include at least two pairs of rollers among:
a pair of first rollers configured to press an end of an opening portion of the battery can so that the end of the opening portion of the battery can has an inclined section inclined toward a central axis of the battery can;
a pair of second rollers configured to press the end of the opening portion of the battery can having the inclined section so that a sealed section is formed to be perpendicular to a lateral portion of the battery can; and
a pair of third rollers configured to press the lateral portion of the opening portion of the battery can having the inclined section and the sealed section so that a flat section is formed in parallel with a lower surface of the battery can.

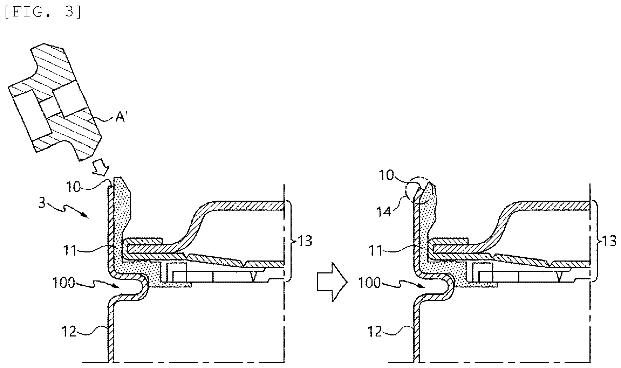

Specifically, referring to FIGS. 2 and 3, in a cylindrical secondary battery 3, an inclined section 14 inclined toward a central axis of a battery can is formed as an end 10 of an opening portion of the battery can 1 is pressed by the first rollers A (a cross-section A' of the first roller is illustrated in FIG. 3). In some instances, a gasket 11 is also inclined toward the central axis of the battery can by the first rollers A.

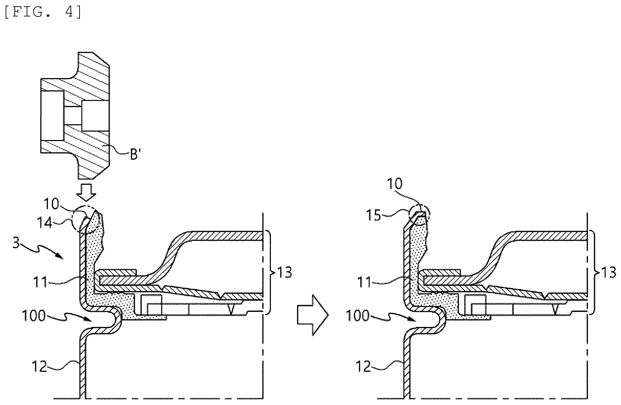

In addition, referring to FIGS. 2 and 4, a sealed section 15 perpendicular to a lateral portion 12 of the battery can is formed as the end 10 of the opening portion of the battery can having the inclined section 14 is pressed by the second rollers B (a cross-section B' of the second roller is illustrated in FIG. 4). The sealed section 15 may serve to seal the battery can 1 by the following third rollers.

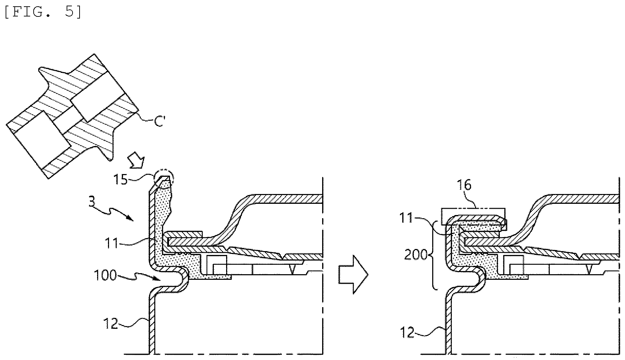

In addition, referring to FIGS. 2 and 5, a flat section 16 is formed as a portion between a beading portion 100 and the end 10 of the opening portion of the battery can having the inclined section 14 and the sealed section 15 is pressed by the third rollers C (a cross-section C' of the third roller is illustrated in FIG. 5). Therefore, a crimping portion 200 is formed.

The above-mentioned process of forming the inclined section 14, the sealed section 15, and the flat section 16 is referred to as a crimping process which is a process of coupling and sealing an upper end cap after an electrolyte is injected into the battery can. In addition, cross-sections of the first to third rollers have different shapes. In addition, as necessary, those skilled in the art may change pressures, pressing positions, pressing areas, and the like implemented by the first to third rollers. In addition, as necessary, those skilled in the art may control changes in heights, rotation directions, rpm, movement speeds, and the like of the first to third rollers to enable the target press-forming process (e.g., the crimping process).

The cylindrical secondary battery 3 includes the battery can 1, a jelly-roll electrode assembly (having a structure in which a first electrode, a separator, and a second electrode are stacked and wound) (not illustrated) accommodated in the battery can 1, the beading portion 100 configured to mount a cap assembly 13 on an upper portion of the battery can 1, and the crimping portion 200 configured to seal the battery.

In this case, the cap assembly 13 may have a structure implemented by sequentially stacking an upper end cap configured to form a cathode terminal, a positive temperature coefficient (PTC) element configured to block electric current by greatly increasing battery resistance when a temperature in the battery is raised, a safety vent configured to block electric current and/or discharge gas when a pressure in the battery is raised, an insulation member configured to electrically separate a predetermined part of the safety vent from a cap plate, and the cap plate having a tab connected to a cathode. In addition, the cap assembly 13 is mounted on the beading portion 100 pressed inward by performing the beading process on the upper end of the battery can 1 in a state in which the gasket 11 is mounted.

The above-mentioned multi-roller system may include at least two pairs of rollers among the first rollers A, the second rollers B, and the third rollers C.

As described above, the crimping process performed by the first rollers A, the second rollers B, and the third rollers C specifically includes first to third steps, and the crimping process may be sequentially performed by the first to third rollers.

In addition, referring to FIGS. 3 to 5, the cross-sections of the first to third rollers have different shapes depending on the target forming, the heights of the first to third rollers are controlled, and the first to third rollers have the independent rotation axes.

The embodiment of the present invention provides the multi-roller system, wherein the inclined section has an angle of more than 0 degree and less than 90 degrees based on the central axis of the battery can.

According to another embodiment, the inclined section of the end of the opening portion of the battery can may have an angle of more than 0 degree, more than 10 degrees, more than 20 degrees, more than 30 degrees, or more than 40 degrees with respect to the central axis of the battery can.

According to another embodiment, the inclined section of the end of the opening portion of the battery can may have an angle of less than 90 degrees, less than 80 degrees, less than 70 degrees, less than 60 degrees, or less than 50 degrees with respect to the central axis of the battery can.

Specifically, referring to FIG. 3, the inclined section 14 of the end 10 of the opening portion of the battery can 1 has an angle of about 30 degrees with respect to the central axis of the battery can.

The embodiment of the present invention provides the multi-roller system, wherein a length of the flat section is 5% or more and 30% or less of a diameter of the battery can.

According to another embodiment, the length of the flat section may be 5% or more, 10% or more, or 15% or more based on the diameter of the battery can.

According to another embodiment, the length of the flat section may be 30% or less, 25% or less, or 20% or less based on the diameter of the battery can.

Specifically, referring to FIG. 5, when the length of the flat section 16 satisfies the above-mentioned range, the length of the flat section 16 provides a sufficient space in which a subsequent welding process may be performed, thereby reducing a defect rate and ensuring structural stability. However, if the length of the flat section 16 is less than 5%, the length of the flat section is too short, such that a sufficient space in which the subsequent welding process may be performed cannot be provided. For this reason, a rate of defect, which may occur during the welding process, may increase, and a stable coupling force cannot be applied to a portion where the welding is performed, which may degrade structural stability. In addition, if the length of the flat section 16 is more than 30%, the end 10 of the opening portion of the battery can may come into contact with an electrode terminal formed on an upper end central portion of the cap assembly 13. For this reason, a short circuit may occur, which may degrade the performance of the secondary battery.

The embodiment of the present invention provides the multi-roller system, wherein a pressure applied by the second roller is 101% or more and 300% or less of a pressure applied by the first rollers.

According to another embodiment, the pressure applied by the second roller may be 101% or more, 110% or more, 120% or more, 1300 or more, 1400 or more, 150% or more, 160% or more, 1700 or more, 1800 or more, or 190% or more of the pressure applied by the first roller.

According to another embodiment, the pressure applied by the second roller may be 300% or less, 290% or less, 280% or less, 270% or less, 260% or less, 250% or less, 240% or less, 230% or less, 220% or less, or 2100 or less of the pressure applied by the first roller.

Specifically, referring to FIG. 5, if the pressure applied by the second roller is 101% or less of the pressure applied by the first roller, it may not be easy to further bend the end 10 of the opening portion of the battery can to form the flat section 16 on the crimping portion 200. In addition, if the pressure applied by the second roller is more than 300% of the pressure applied by the first roller, the pressure is excessively raised, and it may be difficult to adjust the deformation of the end 10 of the opening portion of the battery can. Therefore, a rate of defect of a product may increase because of the excessive deformation during the process of forming the flat section on the crimping portion.

The embodiment of the present invention provides an apparatus for forming a battery can, the apparatus comprising: a fixing unit configured to fix a battery can; and the above-mentioned multi-roller system.

Specifically, referring to FIG. 2, a fixing unit 2 surrounds a middle or lower portion of the battery can 1 to fix the battery can 1. For example, a chuck, a jaw, or the like may be used as the fixing unit 2. In addition, the number of fixing units may vary depending on a formed state of the battery can or a size of an applied model of the battery can.

The embodiment of the present invention provides vides a method of forming a battery, the method comprising: assembling a battery by positioning an electrode assembly, in which a first electrode, a separator, and a second electrode are sequentially stacked and wound, in a battery can, injecting an electrolyte, forming a beading portion pressed inward at an end of the battery can adjacent to an opening portion of the battery can, and stacking a gasket and a cap assembly on the beading portion; fixing the battery can; forming an inclined section in which an end of the opening portion of the battery can is inclined toward a central axis of the battery can by pressing the end of the opening portion positioned above the beading portion; forming a sealed section in which the end of the opening portion of the battery can is parallel to a lateral portion of the battery can by pressing the end of the opening portion of the battery can having the inclined section; and forming a flat section parallel to a lower surface of the battery can by pressing the end of the opening portion of the battery can having the inclined section and the sealed section, wherein at least two of forming the inclined section, forming the sealed section, and forming the flat section use the above-mentioned multi-roller system.

In the embodiment, the term "first electrode" refers to an anode and the term "second electrode" refers to a cathode or vice versa.

The cathode includes a cathode current collector, and a cathode active material applied onto at least one surface of the cathode current collector. For example, the cathode current collector may be made of, but not limited to, aluminum, alloy, or the like. For example, the cathode active material may be made of, but not limited to, a lithium-containing transition metal oxide.

The anode includes an anode current collector, and an anode active material applied onto at least one surface of the anode current collector. For example, the anode current collector may be made of, but not limited to, copper, alloy, or the like. For example, the anode active material may be made of, but not limited to, carbon.

The separator refers to a film interposed between the cathode and the anode and serves to separate the cathode and the anode and facilitate movements of ions required to block a circuit. For example, the separator may be, but not limited to, a microporous film or the like having a polyolefin-based film.

In addition, the battery can refers to a receptacle having an approximately cylindrical shape having an opening portion at one side thereof and is made of a metallic material having conductivity. A lateral surface of the battery can and a surface opposite to the opening portion may be generally integrated. That is, based on a height direction of the battery can, the battery can is generally configured such that an upper end thereof is opened, and a lower end thereof is closed in the remaining region except for a central portion. The lower surface of the battery can may have an approximately flat shape. The battery can accommodates the electrode assembly through the opening portion formed at one side based on the height direction thereof. The battery can may also accommodate the electrolyte through the opening portion.

First, the electrode assembly having the structure, in which the first electrode, the separator, and the second electrode are sequentially stacked and wound, is positioned on the battery can, and the electrolyte is injected. Next, the beading portion pressed inward and formed at the lateral end adjacent to the opening portion of the battery can is formed, and thus the battery can having the beading portion is prepared. Then, the gasket and the cap assembly are stacked on the beading portion. These processes correspond to the steps before the crimping process.

Next, referring to FIGS. 2 to 5, the crimping process is performed by the first to third rollers.

Referring to FIGS. 2 and 3, the inclined section 14 inclined toward the central axis of the battery can is formed as the first rollers A (FIG. 3 illustrates the cross-section A' of the first roller) press the end 10 of the opening portion of the battery can 1.

In addition, referring to FIGS. 2 and 4, the sealed section 15 perpendicular to the lateral portion 12 of the battery can is formed as the second roller B (FIG. 4 illustrates the cross-section B' of the second roller) press the end 10 of the opening portion of the battery can having the inclined section 14. The sealed section 15 may serve to seal the battery can 1 by the following third rollers.

In addition, referring to FIGS. 2 and 5, the flat section 16 is formed as the third rollers C (FIG. 5 illustrates the cross-section C' of the third roller) press the portion between the beading portion 100 and the end 10 of the opening portion of the battery can having the inclined section 14 and the sealed section 15. The above-mentioned process of forming the inclined section 14, the sealed section 15, and the flat section 16 is referred to as a crimping process which is a process of coupling and sealing an upper end cap after an electrolyte is injected into the battery can.

The above-mentioned process is a segmentalized crimping process and may be sequentially performed by the segmentalized first to third steps.

In addition, referring to FIGS. 3 to 5, the cross-sections of the first to third rollers have different shapes depending on the target forming, the heights of the first to third rollers may be controlled, and the first to third rollers have the independent rotation axes.

The embodiment of the present invention provides the method of forming a battery can in which the inclined section of the end of the opening portion of the battery can has an angle of more than 0 degree and less than 90 degrees with respect to the central axis of the battery can.

According to another embodiment, the inclined section of the end of the opening portion of the battery can may have an angle of more than 0 degree, more than 10 degrees, more than 20 degrees, more than 30 degrees, or more than 40 degrees with respect to the central axis of the battery can.

According to another embodiment, the inclined section of the end of the opening portion of the battery can may have an angle of less than 90 degrees, less than 80 degrees, less than 70 degrees, less than 60 degrees, or less than 50 degrees with respect to the central axis of the battery can.

Specifically, referring to FIG. 3, the inclined section 14 of the end 10 of the opening portion of the battery can 1 has an angle of about 30 degrees with respect to the central axis of the battery can.

The embodiment of the present invention provides the method of forming a battery can in which a length of the flat section is 5% or more and 30% or less based on a diameter of the battery can.

According to another embodiment, the length of the flat section may be 5% or more, 10% or more, or 15% or more based on the diameter of the battery can.

According to another embodiment, the length of the flat section may be 30% or less, 25% or less, or 20% or less based on the diameter of the battery can.

Specifically, referring to FIG. 5, when the length of the flat section 16 satisfies the above-mentioned range, the length of the flat section 16 provides a sufficient space in which a subsequent welding process may be performed, thereby reducing a defect rate and ensuring structural stability. However, if the length of the flat section 16 is less than 5%, the length of the flat section is too short, such that a sufficient space in which the subsequent welding process may be performed cannot be provided. For this reason, a rate of defect, which may occur during the welding process, may increase, and a stable coupling force cannot be applied to a portion where the welding is performed, which may degrade structural stability. In addition, if the length of the flat section 16 is more than 30%, the end 10 of the opening portion of the battery can may come into contact with an electrode terminal formed on an upper end central portion of the cap assembly 13. For this reason, a short circuit may occur, which may degrade the performance of the secondary battery.

The embodiment of the present invention provides the method of forming a battery can in which the pressure applied to form the sealed section may be 101% or more and 300% or less of the pressure applied to form the inclined section.

According to another embodiment, the pressure applied by the second roller may be 101% or more, 110% or more, 120% or more, 1300 or more, 1400 or more, 150% or more, 160% or more, 1700 or more, 1800 or more, or 190% or more of the pressure applied by the first roller.

According to another embodiment, the pressure applied by the second roller may be 300% or less, 290% or less, 280% or less, 270% or less, 260% or less, 250% or less, 240% or less, 230% or less, 220% or less, or 2100 or less of the pressure applied by the first roller.

Specifically, referring to FIG. 5, if the pressure applied by the second roller is 101% or less of the pressure applied by the first roller, it may not be easy to further bend the end 10 of the opening portion of the battery can to form the flat section 16 on the crimping portion 200.

In addition, if the pressure applied by the second roller is more than 300% of the pressure applied by the first roller, the pressure is excessively raised, and it may be difficult to adjust the deformation of the end 10 of the opening portion of the battery can. Therefore, a rate of defect of a product may increase because of the excessive deformation during the process of forming the flat section 16 on the crimping portion 200.

While the exemplary embodiments of the present invention have been described above, the present invention is not limited thereto, and various modifications can be made and carried out within the scope of the claims and the detailed description of the invention and also fall within the scope of the invention.

## Claims

1. A multi-roller system comprising:
two pairs or more of rollers,
wherein the two pairs or more of rollers rotate about independent rotation axes, respectively, changes in heights of the two pairs or more of rollers are independently controlled, cross-sections of one or more of the two pairs or more of rollers have different shapes, and intervals between a battery can and the two pairs or more of rollers are different from one another.

2. The multi-roller system of claim 1, wherein the two pairs or more of rollers include at least two pairs of rollers among:
a pair of first rollers configured to press an end of an opening portion of the battery can so that the end of the opening portion of the battery can has an inclined section inclined toward a central axis of the battery can;
a pair of second rollers configured to press the end of the opening portion of the battery can having the inclined section so that a sealed section is formed to be perpendicular to a lateral portion of the battery can; and
a pair of third rollers configured to press the lateral portion of the opening portion of the battery can having the inclined section and the sealed section so that a flat section is formed in parallel with a lower surface of the battery can.

3. The multi-roller system of claim 2, wherein the inclined section has an angle of more than 0 degree and less than 90 degrees based on the central axis of the battery can.

4. The multi-roller system of claim 2, wherein a length of the flat section is 5% or more and 30% or less of a diameter of the battery can.

5. The multi-roller system of claim 2, wherein a pressure applied by the second roller is 101% or more and 300% or less of a pressure applied by the first rollers.

6. An apparatus for forming a battery can for a secondary battery, the apparatus comprising:
a fixing unit configured to fix a battery can; and
a multi-roller system according to any one of claims 1 to 5.

7. A method of forming a battery, the method comprising:
assembling a battery by positioning an electrode assembly, in which a first electrode, a separator, and a second electrode are sequentially stacked and wound, in a battery can, injecting an electrolyte, forming a beading portion pressed inward at an end of the battery can adjacent to an opening portion of the battery can, and stacking a gasket and a cap assembly on the beading portion;
fixing the battery can;
forming an inclined section in which an end of the opening portion of the battery can is inclined toward a central axis of the battery can by pressing the end of the opening portion positioned above the beading portion;
forming a sealed section in which the end of the opening portion of the battery can is parallel to a lateral portion of the battery can by pressing the end of the opening portion of the battery can having the inclined section; and
forming a flat section parallel to a lower surface of the battery can by pressing the end of the opening portion of the battery can having the inclined section and the sealed section,
wherein at least two of forming the inclined section, forming the sealed section, and forming the flat section use the multi-roller system according to any one of claims 1 to 5.

8. The method of claim 7, wherein the inclined section of the end of the opening portion of the battery can has an angle of more than 0 degree and less than 90 degrees with respect to the central axis of the battery can.

9. The method of claim 7, wherein a length of the flat section is 5% or more and 30% or less of a diameter of the battery can.

10. The method of claim 7, wherein a pressure applied to form the sealed section is 101% or more and 300% or less of a pressure applied to form the inclined section.
